(19) Europäisches Patentamt
European Patent Office
Office européen des brevets

(11) **EP 4 435 935 A1**

(12) **EUROPEAN PATENT APPLICATION**

(43) Date of publication:
**25.09.2024 Bulletin 2024/39**

(21) Application number: **23163590.5**

(22) Date of filing: **22.03.2023**

(51) International Patent Classification (IPC):
*H01M 10/653* (2014.01)    *H01M 10/655* (2014.01)
*H01M 10/658* (2014.01)    *H01M 10/659* (2014.01)
*H01M 50/202* (2021.01)    *H01M 50/213* (2021.01)
*H01M 50/222* (2021.01)    *H01M 50/227* (2021.01)
*H01M 50/233* (2021.01)    *H01M 50/291* (2021.01)
*H01M 50/293* (2021.01)

(52) Cooperative Patent Classification (CPC):
**H01M 50/291; H01M 10/653; H01M 10/655;**
**H01M 10/658; H01M 10/659; H01M 50/202;**
**H01M 50/213; H01M 50/222; H01M 50/227;**
**H01M 50/233; H01M 50/293**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(71) Applicant: **Volocopter GmbH**
**76646 Bruchsal (DE)**

(72) Inventors:
• **CHARB, Chanti**
**86159 Augsburg (DE)**
• **GUTIERREZ, Pablo**
**69115 Heidelberg (DE)**

(74) Representative: **LBP Lemcke, Brommer & Partner**
**Patentanwälte mbB**
**Siegfried-Kühn-Straße 4**
**76135 Karlsruhe (DE)**

(54) **ENCAPSULATED BATTERY CELL AND BATTERY CELL ARRANGEMENT**

(57)    We disclose an encapsulated battery cell, comprising:
a battery cell (1, 2) of cylindrical shape;
a structure (4), preferably polygonal, most preferably hexagonal, surrounding said battery cell (1, 2) in a plane transverse to a longitudinal axis of said battery cell (1, 2);
an insulating material (3) located in a space between said structure (4) and said battery cell (1, 2);
wherein said insulating material (3) has a relatively low thermal conductivity of less than 0,3 W/(m*K) at 800°C; and
wherein said structure (4) is made from a heat distributing material having a relatively high thermal conductivity of more than 150 W/(m*K) at 25°C.

We also disclose a battery cell arrangement with a plurality of such encapsulated battery cells contained in a meta (e.g., honeycomb) structure (4') made from said heat distributing material.

Fig. 1

**EP 4 435 935 A1**

## Description

The invention relates to an encapsulated battery cell according to appended claim 1.

The invention also relates to a battery cell arrangement comprising a plurality of encapsulated battery cells, according to claim 10.

Battery cells, such as lithium-ion battery cells, can go into thermal runaway (TR) due to external influences or internal faults, during which they may release large amounts of heat, gases and debris. In order to limit the potentially dangerous effects of such an event, in particular when used onboard of an aircraft, some form of thermal runaway containment of the battery cells is required.

US 2017/271643 A1 proposes to place battery cells into compartments within a honeycomb element that is divided into two equally shaped parts with different heights, the longer one of which functions as a battery separating element to prevent short circuits. Said element is assumed to be made from an electrically insulating plastics material, such as PC, ABS, PP, PE, PET or PA, and suffers from the fact that it lacks thermal conductivity and is of rather high weight.

CN 214153004 U discloses encapsulated battery cells contained in a honeycomb structure. Between said honeycomb structure and the actual battery cell is located a heat absorption layer followed by, in a radial direction, a barrier explosion proof material, a cooling layer and a heat insulation.

In this approach, said heat absorption layer requires a material with high heat capacity, like a phase change material, which presents the disadvantage of rather high weight. Furthermore, said barrier explosion proof material, due to its hexagonal shape, presents a poor geometry to prevent battery explosion. If the material in said heat absorption layer is not stiff enough, the battery cell can induce a sidewall rupture which will impact the explosion proof material that is likely to fail unless a huge amount of material or a material with high strength retention is used, which will make the overall solution overweighted and not suitable for electric mobility, especially for aircraft. Furthermore, the outermost material is described as a heat insulation which is disadvantageous for preventing thermal runaway.

US 2013/183566 A1 discloses architectures of battery cells arrangements with special components that are designed to remove heat as fast as possible from the battery cells to the atmosphere. These components are described to be made of graphite which can be extruded, laminated and/or compressed and shall have an in-plane thermal conductivity of at least 150 W/(m*K), depending on the manufacturing method.

The different architectures proposed in US 2013/183566 A1 are intended to be used for thermal management during normal operation in contrast to a thermal runaway emergency condition. All the configurations shown present a highly conductive material in direct contact with the battery cell which may be counterproductive to preventing thermal runaway propagation as it will spread excess heat too fast, such that neighbouring battery cells reach critical temperatures thus inducing a thermal runaway cascade.

It is the object of the present invention to provide an encapsulated battery cell for use in a battery cell arrangement, in particular for electric mobility, especially in an aircraft, that is lightweight, easy and cheap to manufacture, and which presents enhanced capabilities to prevent thermal runaway propagation. Furthermore, it is an object of the present invention to provide a battery cell arrangement with enhanced thermal runaway propagation prevention capabilities, especially for use onboard an aircraft.

These objects are achieved by means of an encapsulated battery cell as defined in claim 1 and by means of a battery cell arrangement as defined in claim 10.

Advantageous further embodiments of the invention are defined in the sub-claims.

According to a first aspect of the invention, an encapsulated battery cell, comprises: a battery cell of cylindrical shape; a structure, preferably a polygonal structure, most preferably a hexagonal structure, surrounding said battery cell in a plane transverse to a longitudinal axis of said battery cell; an insulating material located in a space between said structure and said battery cell; wherein said insulating material has a relatively low thermal conductivity of less than 0,3 W/(m*K) at 800°C; and wherein said structure is made from a heat distributing material having a relatively high thermal conductivity of more than 150 W/(m*K) at 25°C.

In general, to achieve good packing efficiency, the battery cells (or "cells") in battery pack applications are arranged preferably in a staggered manner. A honeycomb or hexagonal arrangement is a shape or form that provides ideal bordering for heat transfer purposes in staggered applications, creating equal distance of a common cell border between neighbouring cells. Due to the efficiency of this shape or form both in mechanical and thermal applications along with its high market availability makes these hexagonal structures the preferred structures in the context of the present invention. However, the invention is not limited to such shapes or configurations. Other forms such as (regular) polygons or semi-circles may also be used, as long as they provide said heat distributing material around each one of the battery cells.

According to a second aspect of the invention, a battery cell arrangement, comprises a plurality of encapsulated battery cells according to said first aspect of the invention, which battery cells are arranged side by side on a common plane, with parallel longitudinal axes, wherein a plurality of said encapsulated battery cells, preferably all of said plurality of battery cells, are arranged in a meta structure, preferably a polygonal structure, most preferably a honeycomb structure, that consists of interconnected respective structures (e.g., hexagonal structures) of individual battery cells.

The prior art cited above tries to manage thermal runaway temperature loads with one single thermal conductance mechanism. This single conductance mechanism impacts the neighbouring cells in a uniform manner affecting firstly and mostly the cells in the direct vicinity of the thermal runaway spot, which cells may suffer from said temperature loads and go into thermal runaway themselves, which should be avoided.

The basic idea underlying the present invention deploys two different heat conductance mechanisms via two principal elements, i.e., said conductive structure, preferably of honeycomb of hexagonal shape, which is preferably made, e.g., of pure aluminium or any other material with a thermal conductivity of at least 150 W/(m*K) at 25°C, preferably 230 W/(m*K) at 25°C, and an insulating material, e.g., an aerogel, an intumescent paint or any other material with thermal conductivity of of less than 0,3 W/(m*K) at 800°C, preferably less than 0,02 W/(m*K) at 25°C. A magnitude of the respective thermal conductance ratio is proportional to a thickness and conductivity of the heat carrying materials, which leaves room for performance versus weight trade-offs.

The first thermal conduction mechanism, i.e., the one to describe the flow of heat through the boundaries of the battery cells, is of higher resistance and is defined by the insulating material. The second thermal conduction mechanism, i.e., the one to describe the flow of heat in the distribution network (e.g., the honeycomb structure), is of lower resistance and is defined by the highly conducting heat distributing material (e.g., by the honeycomb or hexagonal structure, which functions as a heat distributor).

The high resistance heat diffusion mechanism ensures that any high temperature heat load of a battery cell in a thermal runaway condition (temperatures ranging from 200°C up to 800°C) is travelling slowly out of the malfunctioning battery cells, thus delaying the neighbouring battery cells to reach critical temperatures. Here and in the following, "neighbouring" shall refer to battery cells that are adjacent (or at least close) to a battery cell in thermal runaway ("triggered cell" or "TR cell"). For aircraft applications, the proposed solution offers enough time for continued safe flight and landing following a thermal runaway event. The low resistance heat diffusion mechanism rapidly distributes a lower temperature heat load (ranging from 80°C to 200°C) away from the impacted region and hence allows an exchange of energy with those battery cells in the arrangement (or pack) that are still at even lower temperatures.

With the above mechanism, the battery cells directly next to a thermal runaway region experience lower temperature than in the previous art. An amount of thermal energy that would have caused a critical local temperature in the vicinity of the affected battery cell(s) in all the previous art, can slowly be transferred to battery cells farther away, which will increase their respective temperatures significantly, but not to a critical level.

Furthermore, the components of the proposed encapsulated battery cell and the battery cell arrangement can be manufactured easier than in the prior art and have lower cost of procurement and processing. For example, the aluminium honeycomb structures used in preferred embodiments of the invention can easily be manufactured by expansion or extrusion methods for smaller thickness values, for example 0,1 mm thickness, which makes them significantly less expensive than the irregular shapes and/or graphite materials used in the prior art.

The following embodiments of the invention have proven to be particularly advantageous:

In an embodiment of the encapsulated battery cell according to said first aspect of the invention, the battery cell is enclosed in an anti-rupture container, which container is located between the battery cell and said insulating material.

Such a container may be required if the battery cell (in short also referred to as "cell") is not able to prevent sidewall rupture by itself to prevent catastrophic events. Preferably, such an anti-sidewall rupture container is made of a high stress retention (high strength at high temperature) anti-sidewall rupture tube, although other forms may be used as well.

In a further embodiment of the encapsulated battery cell according to said first aspect of the invention, said container is made from Carbon Fibre Reinforced Plastic, CFRP, or Ceramic Fibric Reinforced Plastic, Cer-FRP, via pull-winding, prepreg wrapping or braidtrusion, in particular in the form of a tube, as stated, wherein preferably a pullwinding tube has a filament angle of up to 10° in relation to a circumferential direction of the tube and a braidtrusion tube has an angle of at most 35° in relation to a circumferential direction of the tube.

The above conditions preferably apply to a tube of at least 0,2 mm thickness per each 21 mm of tube diameter, and 30 kJ of radial heat release. Hence, the bigger the diameter and/or the greater the heat release, the bigger the preferred thickness.

In a further embodiment of the encapsulated battery cell according to said first aspect of the invention, the battery cell is in operative contact with a phase change material, PCM, preferable a low temperature phase change material, LTPCM, that changes phase from solid to liquid between 25°C and 55°C, most preferably at around 45°C.

Said PCM is preferably a non-flammable, most preferably inorganic material which changes phase from solid to liquid at a temperature below the maximum working temperature recommended by the cell manufacturer and above the operational starting temperature of the cells, i.e., of each individual battery cell, which cells are typically of identical type.

An LTPCM will typically and preferably liquify at around 45°C, which is a standard battery operating temperature. The battery cells used by the applicant should not exceed 80°C. If the temperature exceeds this limit, thermal runaway may be imminent. If TR occurs, the heat load at elevated temperatures (more than 200°C) will no longer be managed with the PCM but with the proposed insulation/distribution function according to the above-defined basic idea of the present invention.

If the ambient (initial) temperature is, e.g., 25°C and the maximum operational allowed temperature of the cell is, e.g., 55°C, the phase change should preferably happen somewhere in between those values (e.g., at 45°C). If it happened below 25°C or above 55°C then it would occur out of the cell's operational window, which should be avoided. This motivates the above choice of PCM phase changing temperature.

In a further embodiment of the encapsulated battery cell according to said first aspect of the invention, the PCM is positioned at a bottom of the battery cell, preferably opposite to the battery cell's positive pole.

Ideally, the PCM is positioned at the bottom of the cells to stop the temperature increase such that the temperature measured at the top of the cell, resulting of a temperature gradient across the cell, does not exceed the manufacturer's recommendation.

In a further embodiment of the encapsulated battery cell according to said first aspect of the invention, the PCM is contained by a protection layer or protection film, e.g., silicone, that remedies any corrosive properties of the PCM, wherein preferably the PCM and the protection layer are combined in a common matrix material, e.g., by way of macro encapsulation. Said macro encapsulation can be of a silicone or epoxy compound solid enclosure (non-electrically conductive, high thermally conductive material) forming a container, in which the PCM resides, thus keeping it from flowing away while melted.

This allows for easier manufacture and can avoid any potentially detrimental effect of the PCM on the other battery components.

In a further embodiment of the encapsulated battery cell according to said first aspect of the invention, the insulating material has at least one of a density of less than 200 kg/m³ and a heat capacity of more than 1 kJ/(kg*K).

Such values have proven particularly well suited to achieve the desired effect.

In a further embodiment of the encapsulated battery cell according to said first aspect of the invention, the insulating material consists of a coating of at least one of the heat distributing material, the battery cell and the container, said coating preferably being an intumescent paint, which coating is devised to expand in volume when a temperature exceeds normal operation values above 80°C and when expanded fills the space between said (e.g., hexagonal) structure and the cell or between said (e.g., hexagonal) structure and said container.

Such types of insulating materials are particularly lightweight and thus well suited for mobility applications, especially in aircraft.

In a further embodiment of the encapsulated battery cell according to said first aspect of the invention, the heat distributing material has at least one of a thickness of less than 0,7 mm, preferably less than 0,1 mm, a density of less than 3000 kg/m³ and a thermal diffusivity of more than 90 mm²/s.

A highly preferred material in this respect is aluminium.

In the context of the present invention, applicant has found that specific thermal conductance (W/K) along a thickness direction (i.e., not through) of the heat distributing material is dependent on the through thickness conductance of the insulating material on one of the complete inner faces of the structure, e.g., the hexagon. Hence, thermal conductance along a length of the heat distributing material should be maximized while the conductance through its thickness should be minimized.

In a specific embodiment, the relation between the thermal conductivity of the insulating material on the one hand and the heat distributing material on the other hand preferably requires that thermal conductivity and diffusivity of the heat distributing material (heat distributor, e.g., hexagonal structure or honeycomb) be sufficiently bigger than the thermal conductivity and diffusivity of the insulating material. In this way, the heat conductance of the heat distributing material (expressed in W/K) that allows heat to dissipate along any walls of the structure over a given path length (that should be at least twice long as a cell pitch or cell pitch distance, i.e., a distance between the axes of neighbouring cells) can be at least twice (or more) the heat conductance through an area of a given surface region of the structure, e.g., a facet of the hexagonal structure, and over a length of the insulating material, said length being measured between the outer surface of a cell and said surface area - most preferably for each 30 kJ of energy emitted by a battery cell and per every two battery cells being triggered simultaneous in thermal runaway. This will be explained in more detail below with reference to the drawings.

In a corresponding further embodiment of the encapsulated battery cell according to said first aspect of the invention, the thermal conductivity and thermal diffusivity of the insulating material and the thermal conductivity and thermal diffusivity of the heat distributing material are chosen such that a thermal conductance of the heat distributing material $k_h \cdot \frac{A_h}{L_h}$ is at least twice as big as a thermal conductance of the insulating material $k_i \cdot \frac{A_i}{L_i}$, wherein denotes: $k_h$ the thermal conductivity of the heat distributing material; $A_h$ an area of a cross section through the (e.g., hexagonal) structure in a radial direction with respect to said longitudinal axis of said battery cell; $L_h$ a path length in the (e.g., hexagonal) structure in a plane transverse to said longitudinal axis of said battery cell; $k_i$ the thermal conductivity of the insulating ma-

terial; $A_i$ an area of a surface region of the structure, e.g., of one of the six facets of the hexagonal structure, facing said space; and $L_i$ a minimum distance between said battery cell or the container and said surface region/facet; wherein preferably said path length is equal to at least twice a distance between centres of neighbouring said battery cells (cell pitch).

Furthermore, it is advantageously assumed that if the thermal conductance of the heat distributing material is much bigger or at least twice than the thermal conductance of the insulating material, then:

- the thermal conductivity of the heat distributing material can be lowered;
- the thickness of the heat distributing material (i.e., a wall thickness of the (e.g., hexagonal) structure) can be thinned;
- the heat diffusivity of the heat distributing material can be lowered (i.e., heat capacity and/or density);
- the thickness of the insulating material can be reduced;
- the thermal conductivity of the insulating material can be increased;
- the heat capacity of the insulating material can be lowered.

This can result in further weight and/or cost reduction.

In a further embodiment of the encapsulated battery cell according to said first aspect of the invention, a positive pole of the battery cell and a negative pole of the battery cell protrude from the insulating material and from the (e.g., hexagonal) structure, wherein preferably, for a given battery cell, the negative pole is of circular shape and surrounds the positive pole, and wherein most preferably a ring-shaped space between the negative pole and the positive pole is filled with a top insulator, in particular made from an inorganic material, preferably incorporating high temperature phase change material.

Applicant has found that such a top insulator is preferably made of a material with low thermal conductivity (for example 0,1 W/(m*K)), high heat capacity (for example 3000 J/(kg*K)), low density (for example 800 kg/m$^3$), preferably inorganic media with high temperature phase change materials, and can serve to avoid ejecta from a neighbouring triggered cell (TR cell), which may have become trapped between any additional cover elements, e.g., a lid, and the top of the cell, to transfer enough heat to induce TR propagation.

In a further embodiment of the battery cell arrangement according to said second aspect of the invention, said battery cell arrangement further comprises a battery enclosure with a bottom wall located below said common plane, preferably on a side opposite to the battery cells' positive poles, and with side walls that rise from said bottom wall and surround the battery cells, said enclosure most preferably made of Carbon Fibre Reinforced Plastic, CFRP, with a Glass Fibre Reinforce Plastic (GFRP) isolating film between the battery cells and the CFRP.

In a further embodiment of the battery cell arrangement according to said second aspect of the invention, said battery cell arrangement further comprises, for preferably each of the battery cells, a bottom venting hole located in the battery enclosure, preferably in prolongation of the longitudinal axis of a given battery cell, wherein most preferably a diameter of said venting hole measures between 20% and 60% of a cell pitch distance, which can be equal to a distance between the longitudinal axes of neighbouring battery cells.

Preferably, said venting hole is big enough to allow hot gasses and flames to escape from a triggered cell in a bottom rupture event, i.e., in the case of a ruptured bottom wall of a battery cell, but small enough to affect the battery cell's structural properties only slightly, e.g., by choosing the above values.

In a further embodiment of the battery cell arrangement according to said second aspect of the invention, said battery cell arrangement further comprises at least one battery cell holder (for example, made from UL94-V0 plastic, or from an electrically non-conductive and inorganic (non-flammable) material, e.g., ceramic based, most preferably made of PEI, Macron or similar flame retardant or non-flammable material) in the form of a plate having a plurality of openings or through-holes, a size and location of which correspond to a size and location of the positive and negative poles of the battery cells, wherein said poles are located within said openings or through-holes.

Such a cell holder advantageously provides for a stable location of individual cells in the cell arrangement. It can be made from a high strength (for example 100 MPa tensile strength), low thermal conductivity (for example 0,1 W/(m*K)), electrically isolated material, preferably inorganic (flame retardancy preferably according to an accepted certification, e.g., UL94-V0).

In a further embodiment of the battery cell arrangement according to said second aspect of the invention, said battery cell arrangement further comprises an Electro Magnetic Interference, EMI, protection (for example a layer with thickness 0,02 mm-0,04 mm of copper or 0,1-0,2 mm of aluminium) at least on one side of the battery cell arrangement, preferably located on the same side as the battery cell poles, said EMI protection most preferably comprising at least one of: an electrically conductive material with attenuation greater than 60 dB for the 0,7-18 GHz frequency range; a stiffness and strength below 170 GPa and 220 MPa respectively; a thickness between 0,02 mm and 0,04 mm (copper) or between 0,1 mm and 0,2 mm (aluminium); and impregnation with an electrically conductive flame-retardant adhesive.

This allows venting of the cell's gases and ejecta during a thermal runaway while providing sufficient electromagnetic shielding.

In a further embodiment of the battery cell arrangement according to said second aspect of the invention, said battery cell arrangement further comprises a separator in the form a plate having a plurality of openings or through-holes, a size and location of which correspond to a size and location of the positive and negative poles of the battery cells, wherein said poles are located in respective regions of said openings or through-holes, which openings or through-holes preferably match with the openings or through-holes of the above-described battery cell holder. Said separator is preferably made from an inorganic material (for example aerogel) and preferably has at least one of a thermal conductivity below 0,3 W/(m*K) at 1000°C, a high heat capacity of 1 kJ/(kg*K) and a density below 200 kg/m$^3$.

A preferred function of said separator is to prevent oxygen flow between the cells while allowing space for any electrical cell interconnectors to be placed and connected between the cells.

In a further embodiment of the battery cell arrangement according to said second aspect of the invention, said battery cell arrangement further comprises a lid, preferably from an inorganic material (for example titanium or stainless steel), which closes the battery enclosure on a top side thereof opposite said bottom wall, which lid preferably supports the above-described EMI protection.

Most preferably, the lid is made from a material with low thermal conductivity (less than 20 W/(m*K)) and/or of high strength (at least 400 MPa at 600°C) in order to be able to withstand internal and external damaging effects.

In a further embodiment of the battery cell arrangement according to said second aspect of the invention, said battery cell arrangement further comprises, for preferably each of the battery cells, a top primary venting hole arranged in the lid, preferably more than 80% of a battery cell diameter in size.

This allows venting of cell gases without overmuch affecting mechanical stability.

In a further embodiment of the battery cell arrangement according to said second aspect of the invention, said battery cell arrangement further comprises a plurality of interconnectors, each of them connecting a given battery cell's negative pole to the positive pole of another battery cell, said interconnectors preferably made of aluminium or coated, e.g., tin coated, copper, most preferably connected to said poles by wire bonding or step-welding process with preferably ohmic, ultrasonic or laser welding techniques.

Most preferably, such interconnectors are made of highly electrically conductive (e.g., $3.5 \times 10^7$ S/m), low density (e.g., 2700 kg/m$^3$), corrosion-resistant connectors (for example made of aluminium) that can be connected directly between pairs of battery cells or with an intermediate step for voltage reading or similar.

In a further embodiment of the battery cell arrangement according to said second aspect of the invention, said battery cell arrangement further comprises a thermal shield located in a gap between said meta (e.g., honeycomb) structure and the battery enclosure, which thermal shield has further properties as defined above for the insulating material.

Said thermal shield can be made of a material with low thermal conductivity (e.g., 0,02 W/(m*K)), preferably a light density (e.g., 200 kg/m$^3$) solid material with a high heat capacity (1 kJ/(kg*K)). Alternatively, the thermal shield can be made of a coating which respects the principles mentioned above, preferably an intumescent paint with a reaction temperature as close to 80°C as possible, and, when expanded, fills the gap between the heat distributing material (said structure) and the battery enclosure (or housing).

In a further embodiment of the battery cell arrangement according to said second aspect of the invention, said battery cell arrangement further comprises a temperature and voltage Printed Circuit Board, TV-PCB, preferably a laminated plastic printed circuit board, most preferably made of FR4 material, with electrical bonds to the interconnectors for voltage balancing, which TV-PCB is preferably located in a plane orthogonal to the battery cells' longitudinal axes above the battery cells' poles.

This allows for battery operation and health status data readings such as voltage and temperature.

Further characteristics and advantages of the invention will now be described by way of example in connection with the appended drawings.

Figure 1 shows a top view of a battery cell arrangement according to the invention;

Figure 2 shows a detailed perspective view of the battery cell arrangement in Fig-ure 1;

Figure 3 shows a sectional view along line A-A in Figure 1;

Figure 4 shows a perspective view of a battery cell arrangement according to the invention with additional components;

Figure 5 shows a simplified perspective view of another battery cell arrangement according to the invention;

Figure 6 shows a top view of a battery cell arrangement similar to Figure 5;

Figure 7 shows a sectional view along line A-A of a battery cell arrangement similar to Figure 6; and

Figure 8 shows another top view of a battery cell arrangement similar to Figure 5.

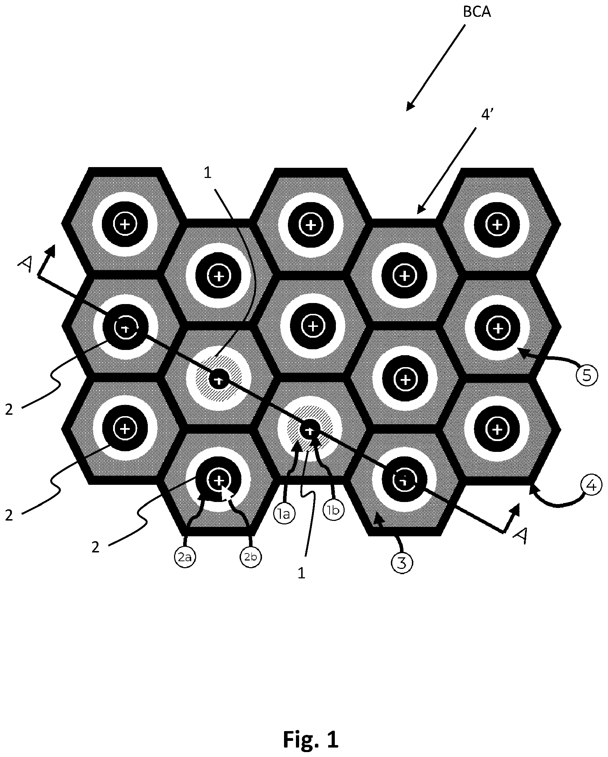

Figure 1 is a top view of a battery cell arrangement BCA according to the present invention. Individual battery cells (or "cells") in the arrangement are denoted 1, 2 and are depicted by means of filled circular areas. An open circle with a plus sign denotes a positive pole of a given cell 1, 2, whereas an area surrounding said circle denotes a negative pole of a given cell 1, 2. Assume cell 1 is a triggered cell; its negative pole is denoted 1a, and its positive pole is denoted 1b (only shown for one cell 1). Reference numerals 2a, 2b denoted respective negative and positive poles of a "normal" cell 2, which is only shown for one such normal cell 2 for reason of clarity.

Each cell 1, 2 is of cylindrical shape (longitudinal axes perpendicular to the plane of the drawing) and is surrounded by an insulating material 3, which insulating material 3 is itself located within a hexagonal structure 4 made from a heat distributing material (so-called heat distributor). The hexagonal structures 4 of the individual cells 1, 2 are interconnected and thus form a honeycomb structure 4' (meta structure) as shown in Figure 1. As described above, said insulating material 3 has a relatively low thermal conductivity of less than 0,3 W/(m*K) at 800°C; and said hexagonal structure 4 is made from a heat distributing material having a relatively high thermal conductivity of more than 150 W/(m*K) at 25°C.

Battery cell arrangement BCA thus comprises a plurality of (encapsulated) battery cells 1, 2 (i.e., battery cells together with at least insulating material 3 and hexagonal structure 4), which battery cells 1, 2 are arranged side by side on a common plane, i.e., the drawing plane of Figure 1, with parallel longitudinal axes, wherein all of said plurality of battery cells 1, 2 are arranged in said honeycomb structure 4' that consists of interconnected respective hexagonal structures 4 of individual battery cells 1, 2.

Immediately surrounding each of the cells 1, 2 there is arranged an optional anti-sidewall rupture container 5 (white rings in Figure 1). If the cell 1, 2 is not able to prevent sidewall rupture by itself, then the anti-sidewall rupture container 5 is preferably provided, as shown. It can be made of a high stress retention (high strength at high temperature) anti-sidewall rupture tube that extends parallel to the cell's axis. Preferably, it is made of Carbon Fibre Reinforced Plastic (CFRP) or Ceramic Fibric Reinforced Plastic (CerFRP) via pull-winding, prepreg wrapping or braidtrusion.

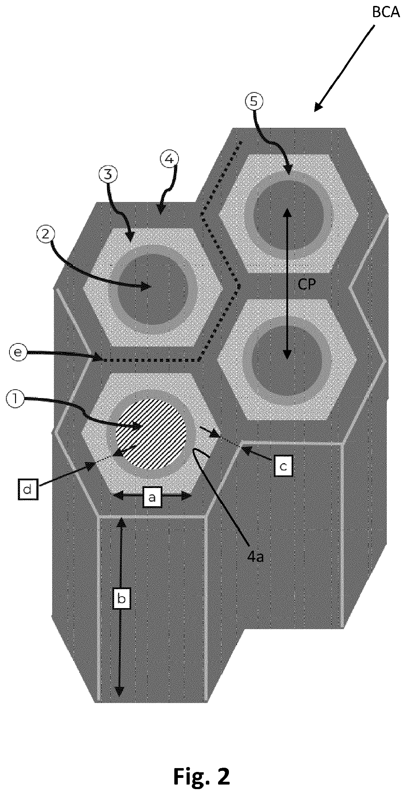

Referring now to Figure 2, which shows a detail from Figure 1 in a perspective view, some basic geometrical aspects shall be explained in further detail.

Please note that in all of the drawings, identical reference signs denote identical elements or elements that have at least a common function.

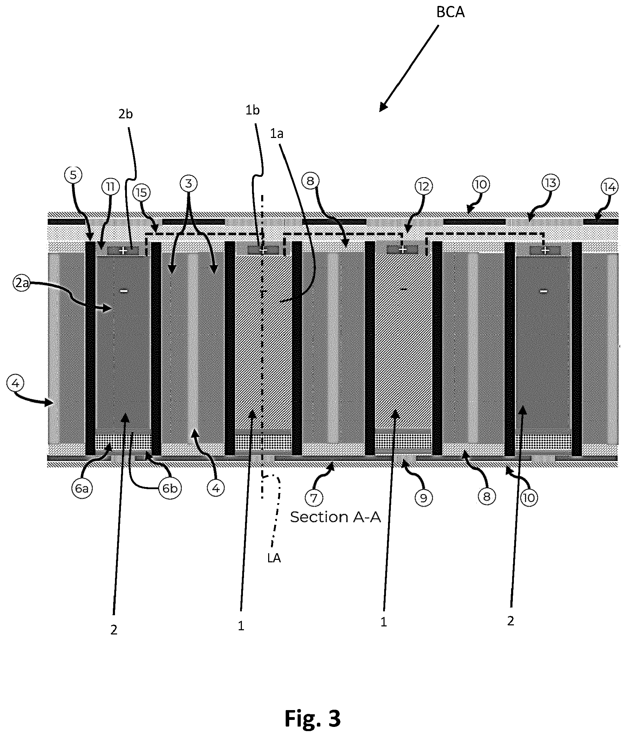

In Figure 2, reference numeral 1 again denotes a triggered cell, while reference numeral 2 stands for a normal cell. The hexagonal structure 4 around each cell 1, 2 is regularly shaped and has six equal sides or facets 4a with width a and height b. Reference numeral c denotes a wall thickness of said facets 4a, while d is the (minimum) distance between a given cell 1, 2 (i.e., its anti-rupture container 5) and facet 4a. Reference numeral e denotes a path (shown as a dotted line) along the hexagonal structure 4 in a plane perpendicular to the cells' longitudinal axis (cf. Figure 3), a length of which path (also denoted e for simplicity) is at least twice as long as a cell pitch CP, i.e., the distance between two neighbouring cells 1, 2, measured from centre to centre for any pair of cells 1, 2.

As already explained in the introductory part, specific thermal conductance (unit W/K) along a thickness (not through) of the heat distributing material (in said hexagonal structure 4) is dependent on the through thickness conductance of insulating material 3 on one of the complete inner faces or facets 4a of the hexagon. Hence, the conductance along the heat distributor's length should be maximized while the conductance through its thickness should be minimized.

The relation between the thermal conductivity of the materials at 3 and 4 requires that thermal conductivity and diffusivity of the material making up the hexagonal structure 4 (heat distributor honeycomb) is sufficiently bigger than the thermal conductivity and diffusivity of insulating material 3 such that the heat conductance of the heat distributing material in hexagonal structure 4 (expressed in W/K) allows an amount of heat to flow through the cross-section c*b (also denoted $A_h$) and along said path of length e (or at least two cell pitches CP away; also denotes $L_h$), which amount should at least two times bigger than the heat flow through the cross-section a*b (also denoted $A_i$) of facet 4a and along said length d of insulating material 3 (also denoted $L_i$) - preferably for each 30 kJ of energy emitted by a cell 1, 2 and per every two cells being triggered simultaneous in thermal runaway (cf. cells 1 in Figure 1).

If, as a numerical example, the thermal conductivity $k_h$ of the heat conducting material in hexagonal structure 4 is 0,24 W/(mm*K) and dimension c is 0,1 mm, while b is 60 mm and e is 50 mm, then the thermal conductance will be equal to $k_h \cdot \frac{A_h}{L_h}$, i.e., 0,03 W/K (= 0,24 W/(mm*K) * (0,1*60 mm²/50 mm)).

On the other hand, if the thermal conductivity $k_i$ of insulating material 3 is 0,000025 W/(mm*K) and dimension a is 11 mm, while b is 60 mm and d is 1,1 mm, then its thermal conductance will be equal to $k_i \cdot \frac{A_i}{L_i}$, i.e., 0,015 W/K (= 0,000025 W/(mm*K) * (11*60 mm²)/1.1 mm). Therefore, the thermal conductance of the heat conducting material in hexagonal structure 4 will be twice the thermal conductance of insulating material 3, as preferred.

Further details can be gathered from section A-A (cf. Figure 1) as shown in Fig-ure 3.

Located below every battery cell 1, 2 are thermal management elements in the form of PCM 6a and protection film 6b, which elements are contained with rupture container 5, with protection film 6b located below and above PCM 6a. Alternatively, both elements can be combined and trapped in a single matrix (not shown).

PCM 6a is preferably a non-flammable, preferably inorganic material that changes phase from solid to liquid at a temperature below the maximum working temperature recommended by the cell manufacturer and above the operational starting temperature of the cells 1, 2. Refer to the introductory part for details.

Protection film 6b is preferably a highly conductive compound (like silicone, for example) that is compatible with the materials in contact. Protection film 6b prevents corrosion that could result from the potentially corrosive properties of the (LT)PCM 6a.

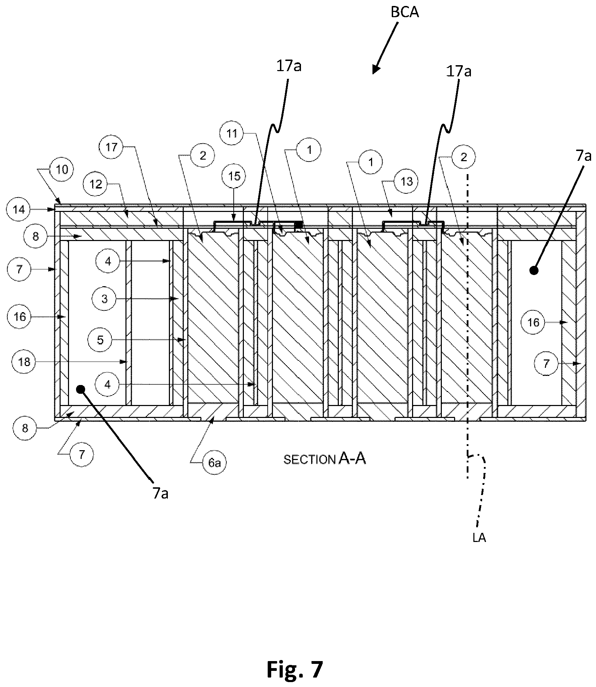

Reference numeral 7 denotes a battery enclosure or housing, which housing is preferable made of a high strength, low weight material with a balanced thermal conductivity as described above. Highly preferred materials are CFRP with a thin Glass Fiber Reinforce Plastic (GFRP) isolating film (not shown) between the cells and the CFRP. Housing 7 is not restricted to the bottom of arrangement BCA, as shown in Figure 3, but can also cover the sides of it (cf. Figure 7).

Reference numeral 8 denotes a (battery) cell holder made from a high strength, low thermal conductivity, electrically isolated material, preferably inorganic (flame retardancy is advantageous, e.g., UL94-V0).

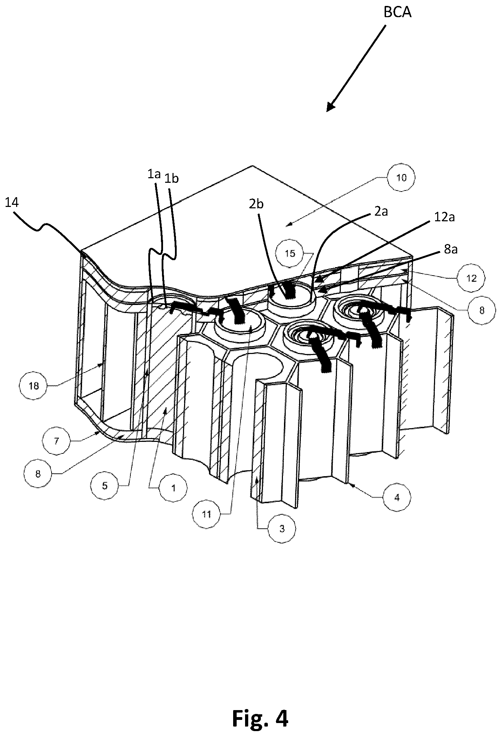

As can best be seen from Figure 4, said battery cell holder 8 generally takes the form of a plate having a plurality of openings or through-holes 8a, a size and location of which holes 8a correspond to a size and location of the positive 1b, 2b and negative poles 1a, 2a of the battery cells 1, 2 (cf. Figure 1), wherein said poles are located within said openings or through-holes 8a.

Back to Figure 3, reference numeral 9 denotes a bottom venting hole. The bottom venting hole 9 is actually a set of holes in the battery enclosure 7 which is (are) big enough to allow hot gasses and flames to escape the cells 1, 2 in a bottom rupture event, but small enough to only slightly affect the battery's structural properties. Preferably, a diameter of each of said venting holes 9 is between 20% and 60% of the cell pitch distance CP (cf. Figure 2). As can be seen, each venting hole 9 is located in prolongation of the longitudinal axis LA of a given battery cell 1, 2.

Reference numeral 10 denotes a burstable EMI protection which serves as a topmost cover for the battery cell arrangement BCA in order to allow venting of the cell's gases and ejecta during a thermal runaway while providing electromagnetic shielding. Preferably, a highly electrically conductive material with attenuation greater than 60 dB for the 0,7-18 GHz frequency range and a stiffness and strength (UTS) preferably below 170 GPa and 220 MPa, respectively, is used, which can have between 0,02 mm and 0,04 mm in thickness. This can provide enough strength to avoid finger poking into the battery pack, but is weak enough to allow easy bursting for pressure relief. Preferably, EMI protection 10 comprises an electrically conductive flame-retardant adhesive.

Reference numeral 11 denotes a top burstable insulator made from a high thermal resistance, high heat capacity, low density, preferably inorganic medium with high temperature phase change materials, to avoid ejecta from neighbouring triggered cells 1, 2 to transfer enough heat to induce a TR propagation.

As can be seen from, e.g., Figure 3 or Figure 4, the positive pole 2b of a given battery cell 2 and the negative pole 2a of the battery cell 2 protrude from the insulating material 3 and from the hexagonal structure 4 (but not from the rupture container 5), wherein a ring-shaped space between the negative pole 2a and the positive pole 2b is filled with said top insulator 11. The same holds for battery cell 1.

Reference numeral 12 denotes a so-called suffocating and separator medium with low thermal conductivity (preferably below 0,3 W/(m*K) at 1000°C), high heat capacity, low density (preferably below 200 kg/m$^3$), made from inorganic material, to prevent oxygen to flow between the cells while allowing space for cell interconnectors to be placed and connected between cells 1, 2.

Said separator medium (or just "separator") 12 can take the form of a plate having a plurality of openings or through-holes 12a as can best be seen from Figure 4, a size and location of which holes correspond to a size and location of the positive and negative poles of the battery cells 1, 2, wherein said poles are located in respective regions of said openings or through-holes, which openings or through-holes 12a match with the openings or through-holes 8a of the battery cell holder 8.

Referring again to Figure 3, reference numeral 13 denotes a top primary venting hole, which is a hole on lid 14, preferably as big as possible without compromising a mechanical stability of the lid 14, preferably measuring more than 80% of the diameter of a battery cell 1, 2. There is one top venting hole 13 per battery cell 1, 2.

Lid 14 is made of high thermal resistance, high strength, preferably inorganic material and is used to cover the battery cell arrangement BCA by closing battery enclosure 7 and to hold the burstable EMI protection 10 mentioned earlier.

Reference numeral 15 denotes the electrical cell interconnectors (dashed lines in Figure 3; cf. also Figure 4) mentioned earlier. Said interconnectors 15 are highly electrically conductive, low weight, corrosive resistant connectors. Preferably made of aluminium or coated copper, they are connected between a given cell's negative pole, e.g., 2a, to a next cell's positive pole, e.g., 1b. There can be an intermediate step for voltage reading or similar (not shown in Figure 3). Preferably, the interconnectors 15 are devised by wire bonding or a step-welding process with ohmic, ultrasonic or laser welding techniques. They pass within corresponding recesses of separator 12, as mentioned (cf. Figure 4).

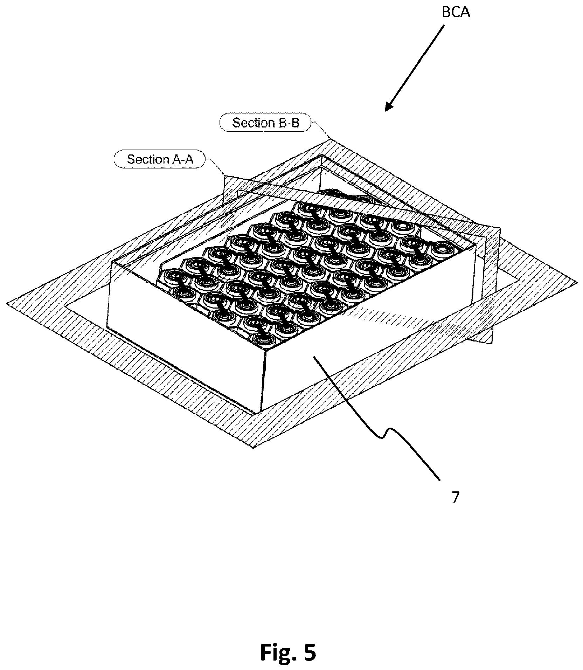

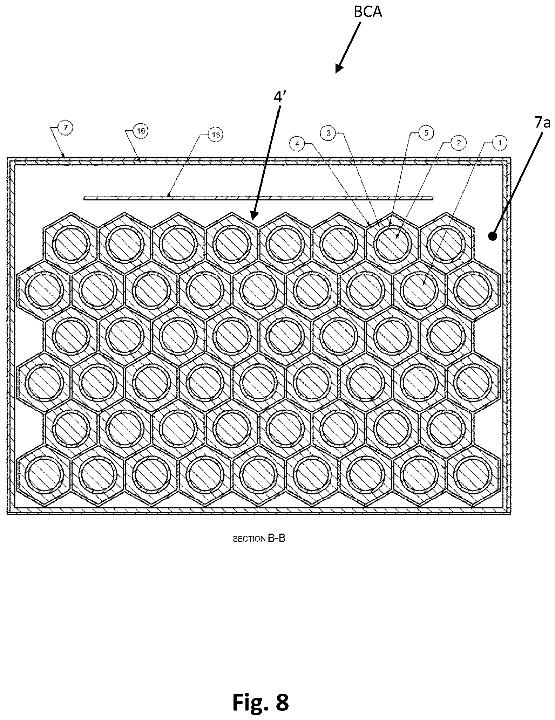

Figure 5 shows a perspective view of battery cell arrangement BCA with enclosure 7. Section A-A is shown Figure 7, while section B-B is depicted in Figure 8.

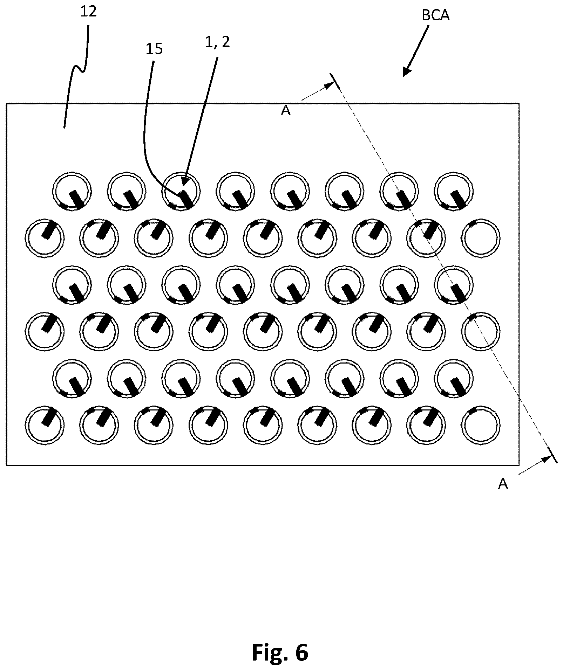

Figure 6 shows a battery cell arrangement similar to Figure 5 in a top view with cell holder 8 and separator 12 in place (cf. Figures 3 and 4).

Figure 7 further shows, at reference numeral 16, a so-called thermal shield. Thermal shield 16 can be a low thermal conductivity, light weight solid medium, preferably with a high heat capacity, and is provided as a cladding at least of an interior face of side walls of enclosure 7. Alternatively, the thermal shield 16 can be made of a coating of an inner side of enclosure 7, which coating respects the principles mentioned above, preferably an intumescent paint that reacts when the temperature elevates to thermal runaway initiation levels and, when expanded, fills a gap or space 7a between the heat distributor (hexagonal structure 4) and housing (enclosure) 7.

In other words: thermal shield 16 is located in said gap 7a between said honeycomb structure 4' (cf. Figure 1 or Figure 8) (hexagonal structure 4) and the battery enclosure 7, which thermal shield 16 has further properties as defined above for the insulating material 3.

Further visible in Figure 7 is Temperature and Voltage Printed Circuit Board (TV-PCB) 17. This laminated plastic printed circuit board is preferably made of FR4 material and has electrical bonds with the interconnectors 15 for voltage balancing (cf. reference numeral 17a). It is located between cell holder 8 and separator 12 on top of insulator 11.

At reference numeral 18, Figures 7 and 8 show a Cell Management Unit Printed Circuit Board (CMU-PCB). This laminated plastic printed circuit board, preferably made of FR4 material, is mechanically attached to the cell holder(s) 8. As can be seen from the drawings, CMU-PCB 18 is located in a plane parallel to the battery cell's longitudinal axes.

The CMU-PCB allows to host various sensitive electronic components such as chipsets, cabling and control boards vital for the battery management and operation.

**Claims**

1. An encapsulated battery cell, comprising:

   a battery cell (1, 2) of cylindrical shape;
   a structure (4), preferably a polygonal structure (4), most preferably a hexagonal structure (4), surrounding said battery cell (1, 2) in a plane transverse to a longitudinal axis (LA) of said battery cell (1, 2);
   an insulating material (3) located in a space between said structure (4) and said battery cell (1, 2);
   wherein said insulating material (3) has a relatively low thermal conductivity of less than 0,3 W/(m*K) at 800°C; and
   wherein said structure (4) is made from a heat distributing material having a relatively high thermal conductivity of more than 150 W/(m*K) at 25°C.

2. The encapsulated battery cell of claim 1, wherein the battery cell (1, 2) is enclosed in an anti-rupture container (5), which container (5) is located between the battery cell (1, 2) and said insulating material (3).

3. The encapsulated battery cell of claim 2, wherein said container (5) is made from Carbon Fibre Reinforced Plastic, CFRP, or Ceramic Fibric Reinforced Plastic, CerFRP, via pull-winding, prepreg wrapping or braidtrusion, in particular in the form of a tube, wherein preferably a pullwinding tube has a filament angle of up to 10° in relation to a circumferential direction of the tube and a braidtrusion tube has an angle of at most 35° in relation to a circumferential direction of the tube, and wherein most preferably a thickness of the tube is at least 0,2 mm.

4. The encapsulated battery cell of any one of claims 1 through 3, wherein the battery cell (1, 2) is in operative contact with a phase change material (6a), PCM, preferable a low temperature phase change material, LTPCM, that changes phase from solid to liquid between 25°C and 55°C, most preferably at around 45°C.

5. The encapsulated battery cell of claim 4, wherein the PCM (6a) is at least one of:

   positioned at a bottom of the battery cell (1, 2), preferably opposite to the battery cell's positive pole (1b, 2b); and
   contained by a protection layer or protection film (6b) that remedies any corrosive properties of the PCM (6a), wherein preferably the PCM (6a) and the protection layer (6b) are combined in a common matrix material.

6. The encapsulated battery cell of any one of claims 1 through 5, wherein the insulating material (3) has at least one of a density of less than 200 kg/m$^3$ and a heat capacity of more than 1 kJ/(kg*K).

7. The encapsulated battery cell of any one of claims 1 through 5, wherein the insulating material (3) consists of a coating of at least one of the heat distributing material, the battery cell (1, 2) and the container according to claim 2 or 3, said coating preferably being an intumescent paint, which coating is devised to expand in volume when a temperature exceeds normal operation values above 80°C and when expanded fills the space between said structure (4) and the cell (1, 2) or, with reference to claim 2 or 3, between said structure (4) and said container (5).

8. The encapsulated battery cell of any one of claims 1 through 7, wherein the heat distributing material has at least one of a thickness of less than 0,7 mm, preferably less than 0,2 mm, a density of less than 3000 kg/m$^3$ and a thermal diffusivity of more than 90 mm$^2$/s.

9. The encapsulated battery cell of any one of claims 1 through 8, wherein the thermal conductivity and thermal diffusivity of the insulating material (3) and the thermal conductivity and thermal diffusivity of the heat distributing material are chosen such that a thermal conductance of the heat distributing material

$$k_h \cdot \frac{A_h}{L_h}$$ is at least twice as big as a thermal conductance of the insulating material $$k_i \cdot \frac{A_i}{L_i}$$, wherein denotes:

$k_h$ the thermal conductivity of the heat distributing material;
$A_h$ an area of a cross section through the structure (4) in a radial direction with respect to said longitudinal axis (LA) of said battery cell (1, 2);
$L_h$ a path length (e) in the structure (4) in a plane transverse to said longitudinal axis (LA) of said battery cell (1, 2);
$k_i$ the thermal conductivity of the insulating material (3);
$A_i$ an area of one of a surface region of the structure (4), e.g., one of the six facets (4a) of a hexagonal structure (4), facing said space; and
$L_i$ a minimum distance between said battery cell (1, 2) or the container (5) according to claim 2 or 3 and said facet (4a);
wherein preferably said path length (e) is equal to at least twice a cell pitch distance (CP) between centres of neighbouring battery cells (1, 2).

10. A battery cell arrangement (BCA), comprising a plurality of encapsulated battery cells according to any one of the preceding claims, which encapsulated battery cells are arranged side by side on a common plane, with parallel longitudinal axes (LA), wherein a plurality of said encapsulated battery cells, preferably all of said plurality of encapsulated battery cells, are arranged in a meta structure (4'), preferably a polygonal structure (4'), most preferably a honeycomb structure (4'), that consists of interconnected respective structures (4) of individual battery cells (1, 2).

11. The battery cell arrangement (BCA) of claim 10, further comprising:

a battery enclosure (7);
for preferably each of the battery cells (1, 2) at least one of:

a bottom venting hole (9) located in the battery enclosure (7), preferably in prolongation of the longitudinal axis (LA) of a given battery cell (1, 2),
wherein most preferably a diameter of said venting hole (9) measures between 20% and 60% of a cell pitch distance (CP), which is equal to a distance between the longitudinal axes (LA) of neighbouring battery cells (1, 2); and
a top primary venting hole (13) arranged in the battery enclosure (7) or in a lid (14) for closing the battery enclosure (7), said top primary venting hole (13) preferably being more than 80% of a battery cell diameter in size.

12. The battery cell arrangement (BCA) of claim 10 or 11, with reference to claim 11, further comprising:
at least one battery cell holder (8) in the form of a plate having a plurality of openings or through-holes (8a), a size and location of which correspond to a size and location of positive poles (1b, 2b) and negative poles (1a, 2a) of the battery cells (1, 2), respectively, wherein said poles (1a, 1b, 2a, 2b) are located within said openings or through-holes (8a).

13. The battery cell arrangement (BCA) of any one of claims 10 through 12, further comprising:
a burstable Electro Magnetic Interference, EMI, protection (10) at least on one side of the battery cell arrangement (BCA), preferably located on the same side as the battery cell poles (1a, 1b, 2a, 2b) with reference to claim 12, said EMI protection (10) most preferably comprising at least one of:

an electrically conductive material with attenuation greater than 60 dB for the 0,7-18 GHz frequency range;
a stiffness and strength below 170 GPa and 220 MPa, respectively;
a thickness between 0,02 mm and 0,2 mm; and
impregnation with an electrically conductive flame-retardant adhesive.

14. The battery cell arrangement (BCA) of any one of claims 10 through 13, further comprising:
a separator (12) in the form of a plate having a plurality of openings or through-holes (12a), a size and location of which correspond to a size and location of the positive poles (1b, 2b) and the negative poles (1a, 2a) of the battery cells (1, 2), respectively, wherein said poles (1a, 1b, 2a, 2b) are located in respective regions of said openings or through-holes (12a), which openings or through-holes (12a) preferably match with the openings or through-holes (8a) of the battery cell holder (8) with reference to claim 13, said separator (12) preferably made from an inorganic material and preferably having at least one of a thermal conductivity below 0,3 W/(m*K) at 1000°C, a high heat capacity of more than 1 kJ/(kg*K) and a density below 200 kg/m$^3$.

15. The battery cell arrangement (BCA) of any one of claims 10 through 14, further comprising:
a thermal shield (16) located in a gap (7a) between said meta structure (4') and a battery enclosure (7), which thermal shield (16) has further properties as defined in claims 1, 6 or 7 for the insulating material (3).

**Fig. 1**

Fig. 2

**Fig. 3**

BCA

**Fig. 4**

**Fig. 5**

**Fig. 6**

SECTION A-A

**Fig. 7**

BCA

4'

7a

SECTION B-B

**Fig. 8**

Europäisches
Patentamt

European
Patent Office

Office européen
des brevets

# EUROPEAN SEARCH REPORT

**Application Number**

EP 23 16 3590

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2022/149457 A1 (TAKATSUJI HIDEYASU [JP]) 12 May 2022 (2022-05-12) * figures 1, 10 * * paragraphs [0067], [0071], [0108] * ----- | 1-15 | INV. H01M10/653 H01M10/655 H01M10/658 H01M10/659 |
| X | EP 3 680 950 A1 (BOEING CO [US]) 15 July 2020 (2020-07-15) * figures 1-4 * * claims 1-5 * ----- | 1-15 | H01M50/202 H01M50/213 H01M50/222 H01M50/227 H01M50/233 H01M50/291 H01M50/293 |

**TECHNICAL FIELDS SEARCHED (IPC)**

H01M

The present search report has been drawn up for all claims

| Place of search | Date of completion of the search | Examiner |
|---|---|---|
| The Hague | 9 August 2023 | Gomes Pinto F., R |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

......................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 16 3590

This annex lists the patent family members relating to the patent documents cited in the above-mentioned European search report.
The members are as contained in the European Patent Office EDP file on
The European Patent Office is in no way liable for these particulars which are merely given for the purpose of information.

09-08-2023

| Patent document cited in search report | | Publication date | Patent family member(s) | | Publication date |
|---|---|---|---|---|---|
| US 2022149457 | A1 | 12-05-2022 | CN | 114207933 A | 18-03-2022 |
| | | | JP | 7215582 B2 | 31-01-2023 |
| | | | JP | WO2021014996 A1 | 28-01-2021 |
| | | | US | 2022149457 A1 | 12-05-2022 |
| | | | WO | 2021014996 A1 | 28-01-2021 |
| EP 3680950 | A1 | 15-07-2020 | EP | 3680950 A1 | 15-07-2020 |
| | | | US | 2020220120 A1 | 09-07-2020 |
| | | | US | 2022216547 A1 | 07-07-2022 |

EPO FORM P0459

For more details about this annex : see Official Journal of the European Patent Office, No. 12/82

**EP 4 435 935 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2017271643 A1
- CN 214153004 U

- US 2013183566 A1